# EUROPÄISCHE PATENTSCHRIFT

(11) **EP 3 252 732 B1**
(45) Veröffentlichungstag und Bekanntmachung des Hinweises auf die Patenterteilung: **30.11.2022**
(21) Anmeldenummer: 17158854.4
(22) Anmeldetag: 02.03.2017
(51) Int. Cl.: G08G 1/01, G08G 1/00, H04W 4/44

(54) **VERFAHREN ZUM ÜBERMITTELN EINER FAHRZEUGPOSITION EINES KRAFTFAHRZEUGS AN ZUMINDEST EINE FAHRZEUGEXTERNE PERSON SOWIE SYSTEM ZUM DURCHFÜHREN EINES DERARTIGEN VERFAHRENS**
METHOD FOR TRANSMISSION OF A VEHICLE LOCATION OF A MOTOR VEHICLE TO AT LEAST ONE PERSON OUTSIDE OF THE VEHICLE, SYSTEM FOR THE EXECUTION OF THE METHOD
PROCÉDÉ DE TRANSMISSION D'UNE POSITION DE VÉHICULE À UNE PERSONNE EXTERNE AU VÉHICULE ET DISPOSITIF SERVEUR ET SYSTÉMÈ A EXÉCUTER LE PROCÉDÉ

(30) Priorität: 31.05.2016 DE 102016006686
(43) Veröffentlichungstag der Anmeldung: 06.12.2017
(73) Patentinhaber: Audi AG, 85045 Ingolstadt (DE)
(72) Erfinder: Jurgenowski, Boris, 85053 Ingolstadt (DE)
(74) Vertreter: Hofstetter, Schurack & Partner

(56) Entgegenhaltungen:
- US-A1- 2010 205 242
- US-A1- 2013 321 178
- US-B2- 9 119 027

## Beschreibung

Die Erfindung betrifft ein Verfahren zum Übermitteln einer Fahrzeugposition eines Kraftfahrzeugs an zumindest eine fahrzeugexterne Person. Zu der Erfindung gehört auch ein System zum Durchführen eines derartigen Verfahrens umfassend eine Servervorrichtung und ein Kraftfahrzeug.

Während einer Fahrt mit einem Kraftfahrzeug kann es vorkommen, dass ein Fahrer oder ein Fahrgast von einer fahrzeugexternen Person zum Beispiel über Telefon gefragt wird: "Wo bist du und wann kommst du an?" Die präzise Beantwortung dieser Frage stellt den Nutzer (Fahrer oder Fahrgast) meist vor ein Problem. Es gibt in heutigen Kraftfahrzeugen keine Möglichkeit, die genaue Position automatisiert einer fahrzeugexternen Person mitzuteilen.

Das Ablesen der aktuellen Position vom Navigationsgerät und andere Lösungen stellen oftmals eine unerwünschte Ablenkung vom Fahrgeschehen dar. Des Weiteren ist nur schwierig eine präzise Aussage möglich. Um später eine Aktualisierung der Ist-Situation für die fahrzeugexterne Person bereitzustellen, ist dann zusätzlich ein weiterer Telefonanruf nötig. Oder sogar eine für die Beobachtung des Verkehrs ungünstige Interaktion mit einem Mobiltelefon oder Smartphone zum Schreiben einer Nachricht.

Aus der DE 10 2012 202 827 A1 ist bekannt, dass Mittel zum Verfolgen des derzeitigen Aufenthaltsorts eines fahrenden Fahrzeugs in Echtzeit verfügbar gestellt werden können. Hierzu muss eine fahrzeugexterne Person eine Verfolgungsanforderung erzeugen, die daraufhin geprüft wird, ob die fahrzeugexterne Person eine Autorisierung für die Verfolgung des Orts des fahrenden Fahrzeugs besitzt. Hierzu ist es nötig, dass die fahrzeugexterne Person einen Code besitzt, mit welchem sie sich authentifizieren kann. Alternativ dazu kann die Person andere Mittel zur Identifikation nutzen. Dieses Verfahren ist dahingehend nachteilig, dass es den Austausch von Daten zur Identifikation erfordert, um sicherzustellen, dass nur berechtigte fahrzeugexterne Personen den Ort des Fahrzeugs verfolgen können.

Aus der DE 102 27 287 A1 ist ein Verfahren bekannt, um ein geparktes Kraftfahrzeug mittels eines mobilen Endgeräts wiederzufinden. Hierzu kann die Position des Kraftfahrzeugs mittels des mobilen Endgeräts abgefragt werden.

Im Zusammenhang mit Internetdiensten betreffend soziale Netzwerke ist bekannt, eine aktuelle Position eines mobilen Endgeräts an eine Servervorrichtung des Internets auszusenden, damit diese dort von anderen Nutzern gelesen werden kann. Dieses zum Beispiel aus der US 2012/0250517 A1 bekannt. Nachteilig hieran ist, dass alle beteiligten Personen über das soziale Netzwerk miteinander verknüpft sein müssen, bevor diese Art des Position-Sharing genutzt werden kann.

Aus dem Dokument US 2010/0205242 A1 ist ein System bekannt, um zwischen mobilen Endgeräten Positionsdaten der jeweiligen Endgeräte auszutauschen, wobei dieser Austausch über einen Server des Internets erfolgt. Jedes Endgerät kann seine Positionsdaten als Push-Nachricht an den Server aussenden. Dann kann man mittels eines der Endgeräte gezielt die Positionsdaten anderer Endgeräte über eine Freundesliste abfragen.

Der Erfindung liegt die Aufgabe zugrunde, mit geringer Vorbereitung einer fahrzeugexternen Person die aktuelle Position des Kraftfahrzeugs mitzuteilen.

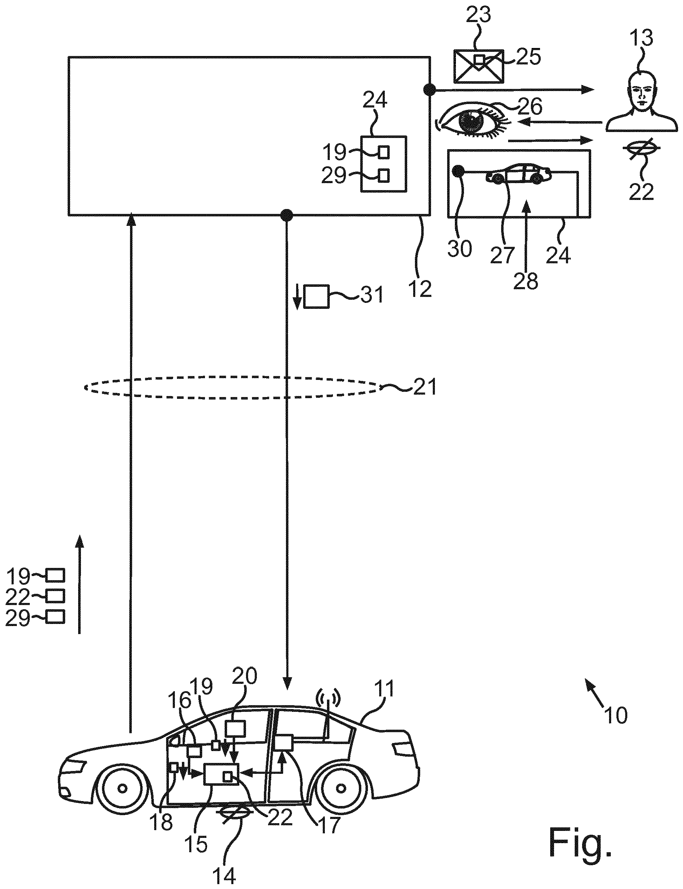

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Verfahren bereitgestellt, mittels welchem eine Fahrzeugposition eines Kraftfahrzeugs an zumindest eine fahrzeugexterne Person übermittelt oder mitgeteilt wird. Durch eine Steuervorrichtung des Kraftfahrzeugs wird zumindest eine Kontaktadresse der zumindest einen Person empfangen. Die zumindest eine Kontaktadresse kann durch Kontaktdaten beschrieben sein. Mit anderen Worten legt der Benutzer die Person, an welche die Fahrzeugposition übermittelt werden soll, selbst fest, indem er eine Kontaktadresse der Person angibt, die entsprechend durch die Steuervorrichtung empfangen wird. Eine stationäre Servervorrichtung empfängt die zumindest eine Kontaktadresse der zumindest einen Person von der Steuereinrichtung des Kraftfahrzeugs. Die Servervorrichtung kann zum Beispiel ein Server des Internets sein.

Durch die Steuervorrichtung des Kraftfahrzeugs wird eine vorbestimmte Betätigungshandlung des Benutzers in dem Kraftfahrzeug detektiert. Beispielsweise kann diese Betätigungshandlung die Betätigung einer Taste sein. Bei detektierter Betätigungshandlung erzeugt die Steuervorrichtung Positionsdaten, welche eine jeweilige aktuelle Fahrzeugposition des Kraftfahrzeugs beschreiben. Hierzu kann in bekannter Weise zum Beispiel ein Empfänger für ein Positionssignal eines GNSS (Global Navigation Satellite System - globales Navigationssatellitensystem), zum Beispiel eines GPS (Global Positioning System) genutzt werden. Die Steuervorrichtung sendet aus dem Kraftfahrzeug über eine Kommunikationsverbindung die Positionsdaten an die stationäre Servervorrichtung aus. Damit ist die jeweils aktuelle Fahrzeugposition des Kraftfahrzeugs in der Servervorrichtung bekannt, indem dort die empfangenen Positionsdaten gespeichert sind.

Durch die Servervorrichtung werden dann die Positionsdaten im Internet über eine Abrufadresse abrufbar bereitgestellt. Beispielsweise kann eine Internetseite automatisiert erzeugt werden, auf welcher die Positionsdaten angegeben sind. Die Abrufadresse ist in diesem Fall ein sogenannter URL (Uniform Resource Locator) oder eine sogenannte Internetadresse. Durch die Servervorrichtung wird die Abrufadresse an die zumindest eine Kontaktadresse der jeweiligen fahrzeugexternen Person ausgesendet. Beispielsweise kann eine E-Mail oder eine Nachricht eines SMS (Short Message Service) an die Person ausgesendet werden. Damit ist jede Person über die Abrufadresse informiert. Jede Person kann dann die Abrufadresse dazu nutzen, die Positionsdaten im Internet abzurufen. Die Servervorrichtung und/oder das Kraftfahrzeug überprüft danach, ob ein vorbestimmtes Löschkriterium erfüllt ist. Bei erfülltem Löschkriterium wird das Bereitstellen der Positionsdaten abgebrochen.

Durch die Erfindung ergibt sich der Vorteil, dass eine Person im Kraftfahrzeug sowohl die Empfänger der Positionsdaten festlegen kann als auch den Zeitpunkt, ab welchem die Positionsdaten verfügbar gemacht werden sollen. Damit hat der Benutzer des Kraftfahrzeugs die vollständige Kontrolle darüber, wann und an wen die Position des Kraftfahrzeugs bereitgestellt wird. Hierbei müssen die fahrzeugexternen Personen keine Vorbereitungen oder Vorkehrungen treffen, da sie eine Abrufadresse erhalten, mittels welcher sie im Internet die Positionsdaten abrufen können. Hierfür kann ein herkömmliches Mittel, wie z.B. ein Internet-Browser genutzt werden.

Die an der Abrufadresse bereitgestellten Positionsdaten können in der beschriebenen Weise von der zumindest einen fahrzeugexternen Person an der Abrufadresse abgerufen werden. Hierzu kann eine fahrzeugexterne Person zum Beispiel einen Personal-Computer (PC) oder ein Smartphone oder einen Tablet-PC nutzen. Beispielsweise kann ein Internet-Browser als Software genutzt werden. Das Abrufen der Positionsdaten wird durch die Servervorrichtung detektiert. Entsprechend wird durch die Servervorrichtung ermittelt, wie viele und/oder welche der zumindest einen Person die Positionsdaten von der Abrufadresse abrufen. Durch die Servervorrichtung werden Identitätsdaten, welche die Anzahl bzw. die zumindest eine abrufende Person beschreiben, an das Kraftfahrzeug ausgesendet. Hierdurch steht in dem Kraftfahrzeug die Information bereit oder zur Verfügung, wie viele und/oder wer die Positionsdaten tatsächlich erfolgreich abgerufen hat. Hierdurch ist dem Benutzer bekannt, ob die Übermittlung der Positionsdaten erfolgreich war.

Zu der Erfindung gehören auch vorteilhafte Weiterbildungen, durch deren Merkmale sich zusätzliche Vorteile ergeben.

Wie bereits ausgeführt, werden die über die Abrufadresse abrufbaren Positionsdaten bevorzugt zyklisch aktualisiert. Hierdurch reicht eine einzige Betätigungshandlung aus, um die zumindest eine fahrzeugexterne Person auch für den weiteren Verlauf der Fahrt über die aktuelle Position des Kraftfahrzeugs zu informieren.

Dies gilt dann so lange, bis das Löschkriterium erfüllt ist. Das Löschkriterium umfasst hierbei bevorzugt, dass die Positionsdaten für eine vorbestimmte Zeitdauer bereitgestellt werden. Die Positionsdaten können hierbei in der beschriebenen Weise zyklisch aktualisiert werden. Dieses Löschkriterium weist den Vorteil auf, dass die Bereitstellung der Positionsdaten automatisiert unterbrochen oder abgebrochen wird, selbst dann, wenn der Benutzer vergisst, dass er die Bereitstellung der Positionsdaten aktiviert hat.

Zusätzlich oder alternativ dazu kann das Löschkriterium umfassen, dass das Kraftfahrzeug einen Fahrzyklus beendet hat. Die Beendigung eines Fahrzyklus kann zum Beispiel durch ein Zündung-aus-Signal signalisiert sein, wenn also eine Zündung des Kraftfahrzeugs abgeschaltet wird. Hierdurch ergibt der Vorteil, dass für den gesamten Rest der Fahrt die Positionsdaten verfügbar sind.

Danach, bei erfülltem Löschkriterium, wird die Bereitstellung der Positionsdaten beendet. Das Kraftfahrzeug kann dies dadurch realisieren, dass es aufhört, aktuelle Positionsdaten auszusenden. Die Servervorrichtung kann dies tun, indem die Positionsdaten an der Abrufadresse gelöscht oder entfernt werden.

Bevorzugt werden zusätzlich zu den Positionsdaten auch andere Daten, die hier als Metadaten bezeichnet sind, ermittelt und von der Servervorrichtung empfangen und an der Abrufadresse bereitgestellt. Die Metadaten beschreiben bevorzugt weitere Eigenschaften der aktuellen Fahrt. Insbesondere umfassen sie eine geschätzte Ankunftszeit, wie sie zum Beispiel durch ein Navigationsgerät bereitgestellt werden kann, und/oder eine Fahrgeschwindigkeit, bei der es sich um eine aktuelle Fahrgeschwindigkeit oder eine mittlere Geschwindigkeit handeln kann, und/oder ein Fahrziel des Kraftfahrzeugs, wie es ebenfalls durch ein Navigationsgerät bereitgestellt oder auf der Grundlage vergangener Fahrten geschätzt werden kann.

Die Metadaten werden bevorzugt in Abhängigkeit von gespeicherten Konfigurationsdaten des Benutzers ausgewählt. Mit anderen Worten kann der Benutzer vor Ausführen der Betätigungshandlung festlegen, welche der Metadaten zusammen mit den Positionsdaten an die Servervorrichtung ausgesendet werden sollen. Hierdurch ergibt sich der Vorteil, dass der Benutzer während einer Fahrt nicht mit dem Auswählen der Metadaten abgelenkt wird. Er kann die Auswahl vorher treffen und durch Speichern der Konfigurationsdaten festlegen. Alternativ dazu kann vorgesehen sein, dass der Benutzer die Auswahl der Metadaten für jede Betätigungshandlung vor oder nach dieser festlegt.

Eine Möglichkeit, um die Identität der abrufenden Person zu ermitteln, ist gegeben, indem jeder Person jeweils ein anderer Link (Verweis) als Abrufadresse zugesendet wird. Ein Link ist eine URL, die zum Beispiel zu einer Internetseite führt. Ein solcher Link kann ergänzt werden durch Identifikationsdaten, die sich für jede fahrzeugexterne Person unterscheiden können. Z.B. kann jeder Link mit einer Nummer ergänzt werden. Wird dann dieser Link genutzt, um die Positionsdaten abzufragen, so empfängt die Servervorrichtung die in dem Link enthaltenen Identifikationsdaten und kann daran erkennen, von wem die Positionsdaten abgerufen werden. Somit ist es nicht nötig, dass die fahrzeugexterne Person selbst Identifikationsdaten bereitstellt.

Wie bereits ausgeführt, lässt sich das Verfahren auslösen mit einer einzigen Betätigungshandlung des Benutzers im Kraftfahrzeug. Diese kann in der beschriebenen Weise eine einzelne Bedienung einer Taste sein oder eines Berührfeldes, wie es zum Beispiel auf einem Touchscreen (Berührungsbildschirm) bereitgestellt werden kann. Somit wird als Betätigungshandlung also bevorzugt eine einzelne Bedienung einer Taste oder eines Berührfeldes detektiert. Dies ist ablenkungsarm und kann somit auch zum Beispiel von einem Fahrer des Kraftfahrzeugs ausgeführt werden.

Zu der Erfindung gehört auch ein System zum Durchführen des Verfahrens, welches zum einen die Servervorrichtung und zum anderen das Kraftfahrzeug umfasst.

Im Folgenden ist ein Ausführungsbeispiel der Erfindung beschrieben. Hierzu zeigt die einzige Figur (Fig.) eine schematische Darstellung einer Ausführungsform des erfindungsgemäßen Systems mit einer Ausführungsform des erfindungsgemäßen Kraftfahrzeugs und einer Ausführungsform der erfindungsgemäßen Servervorrichtung.

Bei dem erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein System 10 mit einem Kraftfahrzeug 11 und einer Servervorrichtung 12. Mittels des Systems 10 kann eine fahrzeugexterne Person 13 zum Beispiel auf einem mobilen Endgerät (Smartphone oder Tablet-PC oder Smart-Watch) oder einem Personal-Computer zum Beispiel auf der Grundlage eines Internet-Browsers eine aktuelle Fahrzeugposition 14 des Kraftfahrzeugs 11 mitgeteilt bekommen.

Die Fahrzeugposition 14 kann der Person 13 vom Kraftfahrzeug 11 aus mitgeteilt werden. Hierzu kann das Kraftfahrzeug 11 eine Steuervorrichtung 15 aufweisen, die mit einer Bedieneinrichtung 16 und einer Kommunikationseinrichtung 17 gekoppelt sein kann. Die Bedieneinrichtung 16 kann zum Beispiel eine Taste oder ein Bedienfeld auf einem Touchscreen umfassen. Der Benutzer im Kraftfahrzeug 11 kann durch Betätigen der Bedieneinrichtung 16 ein Betätigungssignal 18 erzeugen. Dies entspricht einer Betätigungshandlung des Benutzers.

In Abhängigkeit von dem Betätigungssignal 18 kann durch die Steuervorrichtung 15 die aktuelle Fahrzeugposition 14 beispielsweise anhand von Positionsdaten 19 eines Empfängers 20 eines Positionssignals eines GNSS (zum Beispiel eines GPS) ermittelt werden. Mittels der Kommunikationseinrichtung 17 kann die Steuervorrichtung 15 eine Kommunikationsverbindung 21 mit der Servervorrichtung 12 aufbauen. Die Servervorrichtung 12 kann zum Beispiel ein Server des Internets sein. Die Kommunikationsverbindung 21 kann eine Funkverbindung zwischen dem Kraftfahrzeug 11 und zum Beispiel einem WLAN-Router (WLAN - Wireless Local Area Network) oder einem Mobilfunknetzwerk umfassen. Des Weiteren kann die Kommunikationsverbindung 21 eine Internetverbindung umfassen. Die Kombinationseinrichtung 17 kann hierzu zum Beispiel ein Mobilfunkmodul (LTE, UMTS, GSM) und/oder ein WLAN-Funkmodul umfassen.

Die Steuervorrichtung 15 kann mittels der Kommunikationseinrichtung 17 die Positionsdaten 19 an die Servervorrichtung 12 aussenden.

Der Benutzer des Kraftfahrzeugs 11 kann des Weiteren zumindest eine Kontaktadresse 22 zum Beispiel in der Steuervorrichtung 15 festlegen. Mit anderen Worten ist in der Steuervorrichtung 15 zumindest eine Kontaktadresse 22 gespeichert, welche angibt, an welche Person 13 die Positionsdaten 19 mitgeteilt werden sollen. Die Steuervorrichtung 15 kann die zumindest eine Kontaktadresse ebenfalls an die Servervorrichtung 12 aussenden. Bei der Kontaktadresse 22 kann es sich zum Beispiel um eine Telefonnummer handeln, um an die Person zum Beispiel eine Nachricht 23 mittels eines SMS zu übermitteln. Es kann sich auch um eine E-Mail-Adresse handeln, um als Nachricht 23 eine E-Mail zu übermitteln.

Die Servervorrichtung 12 kann die Positionsdaten 19 im Internet zum Beispiel als Internetseite 24 bereitstellen. In der Nachricht 23 kann ein Link 25 enthalten sein, also eine Abrufadresse, mittels welcher die fahrzeugexterne Person 13 zum Beispiel mit einem Internet-Browser einen Abruf 26 der Internetseite 24 auslösen kann. Die Person 13 bekommt dann auf dem Internet-Browser die Internetseite 24 angezeigt. Die Internetseite 24 gibt dabei die Positionsdaten 19 wieder, zum Beispiel als Symbol 27 des Kraftfahrzeugs 11 auf einer Straßenkarte 28.

Durch die Steuervorrichtung 15 können an die Servervorrichtung 11 zusätzlich Metadaten 29 übermittelt werden. Die Steuervorrichtung 12 kann die Metadaten 29 ebenfalls zum Beispiel in die Internetseite 24 integrieren. Die Metadaten 29 können zum Beispiel ein Fahrziel 30 des Kraftfahrzeugs 11 angeben. Die Metadaten können auch zum Beispiel eine geschätzte Ankunftszeit an dem Fahrziel 30 angeben.

Durch den Abruf 26 kann die Servervorrichtung 12 erkennen, welche Person 13 und/oder wie viele Personen 13 die Internetseite 24 abrufen, also die Positionsdaten 19 einsehen. Die Servervorrichtung 12 kann dann Identitätsdaten 31 an das Kraftfahrzeug 11 übertragen, sodass der Benutzer des Kraftfahrzeugs 11 erkennt, wer oder wie viele Personen die Positionsdaten 19 und die Metadaten 29 abgerufen haben.

Somit kann ein Benutzer des Kraftfahrzeugs 11 mit einer einfachen Bedienung der Betätigungseinrichtung 16, zum Beispiel mittels eines Tastendrucks, Kontakten oder einer Kontaktgruppe für einen gewissen Zeitraum seine aktuelle Position 14 und Metadaten 29 übermitteln. Mögliche Metadaten sind hierbei die geschätzte Ankunftszeit (wenn im Navigationsgerät die Zielführung aktiv ist), die Fahrgeschwindigkeit. Die Auswahl der Metadaten 29 ist hierbei bevorzugt konfigurierbar.

Das Teilen oder Mitteilen der Fahrzeugposition 14 (und optional der Metadaten 29) kann bevorzugt nur aus dem Kraftfahrzeug 11 heraus gestartet werden. Der Empfänger, d.h. die Person 13, erhält dann eine URL, zum Beispiel per SMS oder allgemein über einen Kommunikationskanal, und gelangt daraufhin zu einer Internetseite 24, auf der sie bevorzugt ohne vorherige Anmeldung die Positionsdaten 29 und die bereitgestellten Metadaten 29 abfragen kann.

So können Fahrgemeinschaften, Verwandte, Freunde und/oder Geschäftspartner als fahrzeugexterne Personen 13 zum Beispiel Verspätungen oder Treffpunkte mitgeteilt bekommen.

Die Servervorrichtung 12 stoppt automatisch das Bereitstellen der Positionsdaten 19 Uhr nach einer vorbestimmten Zeitdauer, die bevorzugt ebenfalls konfigurierbar ist. Das Bereitstellen der Positionsdaten kann auch nach jedem Fahrzyklus automatisch gestoppt werden. Dem Benutzer des Kraftfahrzeugs 11 wird die Positionsverfolgung oder das Tracking signalisiert durch die Identitätsdaten 31, durch die er auch die Anzahl der Beobachter erfährt.

Der Benutzer des Kraftfahrzeugs 11, zum Beispiel der Fahrer, muss das Teilen seiner Fahrzeugposition 14 aktiv anfordern. Dies wird durch die beschriebene Betätigungshandlung durchgeführt. Im weiteren Verlauf werden die freigegebenen Positionsdaten 19 und optional die Metadaten 29, und der ausgewählte Empfänger oder die ausgewählte Empfängergruppe, d.h. die zumindest eine Person 13, an die Servervorrichtung 12 mitgeteilt. Die Kommunikationsverbindung 21 kann je nach Verbau zum Beispiel ein Steuergerät, wie zum Beispiel ein Gateway oder ein Infotainmentsystem, bereitstellen, das hierzu die beschriebene Kommunikationseinrichtung 17 aufweist.

Nach erfolgreicher Übertragung generiert die Servervorrichtung 12 die Webseite oder Internetseite 24 und sendet den Link 25 an die ausgewählten Empfänger oder Personen 13. Jede Person 13 hat die Möglichkeit, die Positionsdaten 19 und andere freigegebene Metadaten 29 einzusehen.

Durch zyklische Übertragung der Fahrzeugposition 14 als aktualisierte Positionsdaten 19 wird die Internetseite 24 stets aktualisiert. Nach jedem Fahrzyklus oder nach Ablauf der definierten Zeitdauer wird das Aktualisieren der Internetseite 24 abgebrochen.

Insgesamt zeigt das Beispiel, wie durch die Erfindung eine Remote-Position-Sharing-Funktionalität (Positionsübertragungsfunktionalität) bereitgestellt werden kann.

## Patentansprüche

1. Verfahren zum Übermitteln einer Fahrzeugposition (14) eines Kraftfahrzeugs (11) an zumindest eine fahrzeugexterne Person (13), wobei
- durch eine stationäre Servervorrichtung (12) zumindest eine Kontaktadresse (22) der zumindest einen Person (13) von einer Steuereinrichtung (15) des Kraftfahrzeugs (11) empfangen wird,
- durch die Steuervorrichtung (15) des Kraftfahrzeugs (11) eine vorbestimmte Betätigungshandlung (18) des Benutzers in dem Kraftfahrzeug (11) detektiert wird und bei detektierter Betätigungshandlung (18) Positionsdaten (19), welche eine jeweilige aktuelle Fahrzeugposition (14) beschreiben, erzeugt und aus dem Kraftfahrzeug (11) über eine Kommunikationsverbindung (21) an die stationäre Servervorrichtung (12) ausgesendet werden, und
- durch die Servervorrichtung (12) die Positionsdaten (19) bereitgestellt werden, und danach
- durch die Servervorrichtung (12) und/oder das Kraftfahrzeug (11) überprüft wird, ob ein vorbestimmtes Löschkriterium erfüllt ist, und bei erfülltem Löschkriterium das Bereitstellen der Positionsdaten (19) abgebrochen wird,
**dadurch gekennzeichnet, dass**
durch die Servervorrichtung (12) die Positionsdaten (19) im Internet über eine Abrufadresse (25) abrufbar bereitgestellt werden und die Abrufadresse (25) an die zumindest eine Kontaktadresse (22) ausgesendet wird, und
durch die Servervorrichtung (12) ermittelt wird, wie viele Personen (13) und/oder welche Personen (13) die Positionsdaten (19) von der Abrufadresse (25) tatsächlich erfolgreich abgerufen haben, und dass durch die Servervorrichtung (12) diese Informationen dem Kraftfahrzeug (11) bereitgestellt werden.

2. Verfahren nach Anspruch 1, wobei die über die Abrufadresse (25) abrufbaren Positionsdaten (19) zyklisch aktualisiert werden.

3. Verfahren nach einem der vorhergehenden Ansprüche, wobei das Löschkriterium umfasst, dass die Positionsdaten (19) nur für eine vorbestimmte Zeitdauer bereitgestellt werden und/oder dass das Kraftfahrzeug (11) einen Fahrzyklus beendet.

4. Verfahren nach einem der vorhergehenden Ansprüche, wobei zusätzlich zu den Positionsdaten (19) auch Metadaten (29) ermittelt, von der Servervorrichtung (12) empfangen und an der Abrufadresse (25) bereitgestellt werden, wobei die Metadaten (29) insbesondere umfassen: eine geschätzte Ankunftszeit und/oder eine Fahrgeschwindigkeit und/oder ein Fahrziel (30) der Kraftfahrzeugs (11).

5. Verfahren nach Anspruch 4, wobei die Metadaten (29) in Abhängigkeit von gespeicherten Konfigurationsdaten des Benutzers ausgewählt werden.

6. Verfahren nach einem der vorhergehenden Ansprüche, wobei jeder fahrzeugexternen Person (13) als Abrufadresse (25) ein anderer Link zugesendet wird.

7. Verfahren nach einem der vorhergehenden Ansprüche, wobei als die Betätigungshandlung (18) eine einzelne Bedienung einer Taste (16) oder eines Berührfeldes detektiert wird.

8. System (10) zum Durchführen eines Verfahrens nach einem der vorhergehenden Ansprüche, umfassend eine Servervorrichtung (12) und ein Kraftfahrzeug (11).

9. System (10) nach Anspruch 8,
wobei die Servervorrichtung (12) dazu eingerichtet ist, die die Servervorrichtung (12) betreffenden Schritte eines Verfahrens nach einem der Ansprüche 1 bis 7 durchzuführen.

10. System (10) nach Anspruch 8,
wobei das Kraftfahrzeug (11) eine Steuervorrichtung (15) aufweist, die dazu eingerichtet ist, die das Kraftfahrzeug (11) betreffenden Schritte eines Verfahrens nach einem der Ansprüche 1 bis 7 durchzuführen.

## Claims

1. A method for communicating a vehicle position (14) of a motor vehicle (11) to at least one person (13) external to vehicle, wherein
- at least one contact address (22) of the at least one person (13) is received from a control device (15) of the motor vehicle (11) by a stationary server device (12),
- a predetermined actuation action (18) of the user in the motor vehicle (11) is detected by the control device (15) of the motor vehicle (11) and, upon detected actuation action (18), position data (19) describing a respective current vehicle position (14) is generated and emitted from the motor vehicle (11) to the stationary server device (12) via a communication link (21), and
- the position data (19) is provided by the server device (12), and thereafter
- it is examined by the server device (12) and/or the motor vehicle (11) if a predetermined deletion criterion is satisfied, and the provision of the position data (19) is abandoned with satisfied deletion criterion,
**characterized in that**
by the server device (12), the position data (19) is provided retrievable via a retrieval address (25) in the Internet and the retrieval address (25) is emitted to the at least one contact address (22), and
it is ascertained by the server device (12) how many persons (13) and/or which persons (13) have actually successfully retrieved the position data (19) from the retrieval address (25), and that this information is provided to the motor vehicle (11) by the server device (12).

2. The method according to claim 1, wherein the position data (19) retrievable via the retrieval address (25) is cyclically updated.

3. The method according to any one of the preceding claims, wherein the deletion criterion includes that the position data (19) is only provided for a predetermined period of time and/or that the motor vehicle (11) terminates a driving cycle.

4. The method according to any one of the preceding claims, wherein, in addition to the position data (19), meta data (29) is also ascertained, received by the server device (12) and provided at the retrieval address (25), wherein the meta data (29) in particular includes: an estimated time of arrival and/or a driving speed and/or a destination (30) of the motor vehicle (11).

5. The method according to claim 4, wherein the meta data (29) is selected depending on stored configuration data of the user.

6. The method according to any one of the preceding claims, wherein a different link is sent to each person (13) external to vehicle as the retrieval address (25).

7. The method according to any one of the preceding claims, wherein a single operation of a key (16) or of a touch panel is detected as the actuation action (18).

8. A system (10) for performing a method according to any one of the preceding claims, comprising a server device (12) and a motor vehicle (11).

9. The system (10) according to claim 8,
wherein the server device (12) is configured to perform the steps, relating to the server device (12), of a method according to any one of claims 1 to 7.

10. The system (10) according to claim 8,
wherein the motor vehicle (11) comprises a control device (15), which is configured to perform the steps, relating to the motor vehicle (11), of a method according to any one of claims 1 to 7.

## Revendications

1. Procédé pour transmettre une position de véhicule (14) d'un véhicule à moteur (11) à au moins une personne (13) extérieure au véhicule, comportant :
- recevoir, par un dispositif serveur fixe (12), au moins une adresse de contact (22) de la au moins une personne (13) provenant d'un dispositif de commande (15) du véhicule à moteur (11),
- détecter, par le dispositif de commande (15) du véhicule à moteur (11), une activité d'actionnement prédéterminée (18) de l'utilisateur dans le véhicule à moteur (11) et générer, si l'activité d'actionnement (18) est détectée, des données de position (19) qui décrivent une position de véhicule actuelle (14) respective, et les envoyer au dispositif serveur fixe (12) à partir du véhicule à moteur (11), via une liaison de communication (21), et
- fournir les données de position (19) par le dispositif serveur (12), et ensuite
- vérifier, par le dispositif serveur (12) et/ou le véhicule à moteur (11), si un critère de suppression prédéterminé est satisfait, et interrompre la fourniture des données de position (19) si le critère de suppression est satisfait,
**caractérisé en ce que**
les données de position (19) sont fournies par le dispositif serveur (12) de manière à pouvoir être récupérées sur Internet via une adresse de récupération (25) et l'adresse de récupération (25) est envoyée à la au moins une adresse de contact (22), et
le dispositif serveur (12) détermine le nombre de personnes (13) et/ou les personnes (13) ayant effectivement réussi à récupérer les données de position (19) à partir de l'adresse de récupération (25), et **en ce que** ces informations sont fournies au véhicule à moteur (11) par le dispositif serveur (12).

2. Procédé selon la revendication 1, dans lequel les données de position (19) récupérables via l'adresse de récupération (25) sont mises à jour de façon périodique.

3. Procédé selon l'une des revendications précédentes, dans lequel le critère de suppression comprend la fourniture des données de position (19) uniquement pendant une durée prédéterminée et/ou l'achèvement d'un cycle de conduite du véhicule à moteur (11).

4. Procédé selon l'une des revendications précédentes, dans lequel des métadonnées (29) reçues par le dispositif serveur (12) sont également déterminées en plus des données de position (19) et sont disponibles à l'adresse de récupération (25), les métadonnées (19) comprenant en particulier : une heure d'arrivée estimée et/ou une vitesse de conduite et/ou une destination (30) du véhicule à moteur (11).

5. Procédé selon la revendication 4, dans lequel les métadonnées (29) sont choisies en fonction de données de configuration mémorisées de l'utilisateur.

6. Procédé selon l'une des revendications précédentes, dans lequel un autre lien est envoyé à chaque personne (13) extérieure au véhicule (13) en tant qu'adresse de récupération (25).

7. Procédé selon l'une des revendications précédentes, dans lequel un seul actionnement d'une touche (16) ou d'un champ tactile est détecté comme étant l'activité d'actionnement (18).

8. Système (10) pour mettre en œuvre un procédé selon l'une des revendications précédentes, comprenant un dispositif serveur (12) et un véhicule à moteur (11).

9. Système (10) selon la revendication 8, dans lequel le dispositif serveur (12) est configuré pour exécuter des étapes concernant le dispositif serveur (12) d'un procédé selon l'une des revendications 1 à 7.

10. Système (10) selon la revendication 8, dans lequel le véhicule à moteur (11) comporte un dispositif de commande (15) qui est configuré pour exécuter des étapes concernant le véhicule à moteur (11) d'un procédé selon l'une des revendications 1 à 7.
